(19) Europäisches Patentamt
European Patent Office
Office européen des brevets

(11) **EP 3 021 256 A1**

(12) **EUROPÄISCHE PATENTANMELDUNG**

(43) Veröffentlichungstag:
**18.05.2016 Patentblatt 2016/20**

(51) Int Cl.:
*G06K 9/00* *(2006.01)*  *G06K 9/38* *(2006.01)*

(21) Anmeldenummer: **15189392.2**

(22) Anmeldetag: **12.10.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(30) Priorität: **11.11.2014  DE 102014222972**

(71) Anmelder: **OSRAM GmbH
80807 München (DE)**

(72) Erfinder: **Kaestle, Herbert
83278 Traunstein (DE)**

(54) **VERFAHREN ZUR BILDVERARBEITUNG, PRÄSENZDETEKTOR UND BELEUCHTUNGSSYSTEM**

(57)     Ein Verfahren (S1-S8) dient zur Bildverarbeitung, wobei mindestens ein Objekt (P) in einem aufgenommenen Bild (B) erfasst wird (S2; S2, S3), eine Orientierung mindestens eines erfassten Objekts (P) bestimmt wird (S4, S5) und mindestens ein erfasstes Objekt (P), dessen Orientierung bestimmt worden ist, durch einen Vergleich mit einer Referenz klassifiziert wird (S6, S7), und wobei die Orientierung mittels einer Berechnung mindestens eines Trägheitsmoments ($T_{xx}$, $T_{yy}$, $T_{xy}$) des erfassten Objekts (P) bestimmt wird (S5). Der Präsenzdetektor (2) weist mindestens einen Bildsensor (4), insbesondere CMOS-Sensor, auf und ist zum Durchführen des Verfahrens (S1-S8) ausgebildet ist. Das Beleuchtungssystem (1) weist mindestens einen Präsenzdetektor (2) auf, der mit mindestens einer Lichtquelle (3) des Beleuchtungssystems (1) gekoppelt ist. Die Erfindung ist beispielsweise anwendbar auf Präsenzdetektoren sowie auf Beleuchtungssysteme mit mindestens einem Präsenzdetektor, insbesondere für eine Raumbeleuchtung und eine Außenbeleuchtung.

Fig.2

EP 3 021 256 A1

**(Forts. nächste Seite)**

Fig.3

**Beschreibung**

Die Erfindung betrifft ein Verfahren zur Bildverarbeitung, bei dem mindestens ein Objekt in einem aufgenommenen Bild erfasst wird, eine Orientierung mindestens eines solchen erfassten Objekts bestimmt wird und mindestens ein erfasstes Objekt, dessen Orientierung bestimmt worden ist, durch einen Vergleich mit einer Referenz klassifiziert wird. Die Erfindung ist beispielsweise anwendbar als Präsenzdetektor sowie auf Beleuchtungssysteme mit mindestens einem solchen Präsenzdetektor, insbesondere für eine Raumbeleuchtung und eine Außenbeleuchtung.

Für eine Präsenzerkennung sind passive IR-empfindliche ("PIR"-)Detektoren bekannt, die mit einer einfachen Signalerfassung meist differentiell auf Objektbewegungen in ihrem Sichtfeld reagieren. Dabei nutzen gängige PIR-Detektoren meist PIR-Sensoren auf der Basis pyroelektrischer Effekte, die nur auf sich ändernde IR-Strahlung reagieren. Eine konstante Hintergrundstrahlung bleibt also unberücksichtigt. Solche PIR-Sensoren lassen sich - technisch im Zusammenspiel mit einer Fresnelschen Zonenoptik - nur als Bewegungsmelder anwenden und können nicht zur Detektion einer statischen Präsenz herangezogen werden. Dies ist jedoch für eine fortschrittliche, weil zumindest auch statische Objekterkennung und/oder Objektklassifizierung nicht ausreichend. Ein weiterer Nachteil der PIR-Detektoren besteht darin, dass die aufgrund ihrer IR-tauglichen Fresneloptik ein relativ großes Bauvolumen aufweisen. Zudem ergibt sich aufgrund ihrer typischerweise geringen Winkelauflösung und Reichweite eine relativ hohe Fehldetektionsrate. Wird der Bewegungsmelder im Rahmen eines Beleuchtungssystem aktiviert, muss sich eine Person aufgrund der ausschließlichen Bewegungsempfindlichkeit durch deutliche Gesten bemerkbar machen, damit das Beleuchtungssystem aktiviert wird oder bleibt.

Eine weitere Gruppe bekannter Bewegungsmelder umfasst aktive Bewegungsmelder, welche Mikrowellen im sub-GHz-Bereich oder auch Ultraschallwellen aussenden, um deren Echos nach Dopplerverschiebungen sich bewegender Objekte absuchen. Auch solche aktiven Bewegungsmelder werden typischerweise nur als Bewegungsmelder und nicht zur Detektion statischer Präsenz genutzt.

Ferner ist eine kamerabasierte Präsenzerkennung unter Verwendung eines CMOS-Sensors bekannt. Der CMOS-Sensor nimmt Bilder im typischerweise sichtbaren Spektralbereich auf bzw. erfasst entsprechende Bilddaten. Der CMOS-Sensor ist üblicherweise mit einer Datenverarbeitungseinrichtung gekoppelt, welche die aufgenommenen Bilder oder Bilddaten auf eine Anwesenheit und Klassifizierung vorhandener Objekte hin verarbeitet.

Für eine Objekterkennung ("Object Recognition") mit CMOS-Sensoren ist es bekannt, zunächst mindestens ein Objekt in dem Bild bzw. in den Bilddaten von einem allgemeinen Hintergrund freizusetzen und das Objekt anschließend mittels einer merkmalsbasierten Objekterkennung oder Mustererkennung zu analysieren und bezüglich seiner Eigenschaften hin zu klassifizieren und damit zu erkennen. Für die Anwendungsgebiete der Präsenzerkennung und der Allgemeinbeleuchtung sind dabei hauptsächlich Objekte von Interesse, die einer Person bzw. einer menschlichen Kontur ähneln, um bei positivem Ergebnis z.B. ein entsprechendes Meldesignal an ein Lichtmanagementsystem abzugeben. Ein bekanntes Verfahren zur merkmalsbasierten Objekterkennung ist die sog. "normalisierte Kreuzkorrelationsanalyse", bei der ein von dem Hintergrund freigestelltes und damit erfasstes oder "segmentiertes" Objekt mit einem geeigneten Referenzbild über statistische 2D-Korrelationsanalysen miteinander verglichen wird und das Ergebnis des Vergleichs als ein charakteristisches Ähnlichkeitsmaß zur Entscheidung über eine Personenpräsenz herangezogen wird.

Ein direkter arithmetischer Vergleich zwischen dem erfassten Objekt und dem Referenzbild kann in der Bildverarbeitung jedoch nicht als das Ähnlichkeitsmaß verwendet werden, da hierfür die beiden Vergleichsbilder dieselben Bildwerte wie Belichtung, Kontrast, Position und Perspektive aufweisen müssten, was in Praxis nicht der Fall ist. Daher wird in der Praxis häufig die normalisierte Kreuzkorrelationsanalyse (auch als NCC, "Normalized Cross Correlation" bezeichnet) verwendet. Die normalisierte Kreuzkorrelationsanalyse wertet mit statistischen Methoden absolute Differenzen zwischen einem Originalbild (hier: dem erfassten, freigestellten Objekt bzw. dem zugehörigen Bildbereich) und dem Referenzbild aus, während ergänzend mit einer Faltungsanalyse auch noch absolute Summen zwischen dem Originalbild und dem Referenzbild ausgewertet werden können. Eine Vorrausetzung zur erfolgreichen Anwendung der normalisierten Kreuzkorrelationsanalyse ist aber die gleichartige Winkelanordnung oder Orientierung des Originalbilds und des Referenzbilds. Typischerweise lassen sich mit der normalisierten Kreuzkorrelationsanalyse gleichartige Muster oder Bilder mit einer gegenseitigen Winkelabweichung von bis zu +/-10° ausreichend gut bestimmen.

In der Allgemeinbeleuchtung können die Objekte im Überwachungsbereich, insbesondere bei einer Deckenmontage des CMOS-Sensors, beliebig ausgerichtet sein. Die Anwendung der normalisierten Kreuzkorrelationsanalyse zur Mustererkennung bei unbekannter Ausrichtung des erfassten Objekts lässt sich in einem direkten Lösungsansatz bewerkstelligen, bei dem das Referenzbild schrittweise in alle Winkelpositionen gedreht wird und die vergleichsweise rechenintensive normalisierte Kreuzkorrelationsanalyse für jede Winkelposition zur Ähnlichkeitsprüfung durchgeführt wird.

Mit einer Vorabbestimmung der Orientierung, insbesondere Winkelausrichtung, des erfassten und nun zu klassifizierenden Objekts lässt sich der Rechenaufwand zur Ähnlichkeitsprüfung mit der normalisierten Kreuzkorrelationsanalyse erheblich verringern. Eine bekannte Methode zur Bestimmung der Objektorientierung umfasst die Auswertung einer Fourier-Mellin-Transformation in einem Polarkoordinatensystem. Diese Auswertung ist allerdings ebenfalls rechenintensiv und kann bei komplexer geformten Objekten merkliche Ungenauigkeiten und Unzuverlässigkeiten zeigen. Auch andere bekannte Fourierbasierte Ansätze werden in der Regel rechentechnisch mit aufwändigen Floating-point-basierten Algorithmen durchgeführt, da bei diesen Transformationen ein Bild oder Bildbereich vom dem positiven Ortsraum in den inversen Fourierraum zwischen 0 und 1 projiziert wird.

Es ist die **Aufgabe** der vorliegenden Erfindung, die Nachteile des Standes der Technik zumindest teilweise zu überwinden und insbesondere eine verbesserte Möglichkeit zur Klassifizierung von Objekten, insbesondere Personen, die von einer Kamera beobachtet worden sind, bereitzustellen. Es ist insbesondere eine Aufgabe der vorliegenden Erfindung, eine rechentechnisch einfachere Möglichkeit zur Bestimmung einer Orientierung eines zu klassifizierenden Objekts bereitzustellen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Verfahren zur Bildverarbeitung bei dem mindestens ein Objekt in einem aufgenommenen Bild erfasst wird, eine Orientierung mindestens eines erfassten Objekts bestimmt wird und mindestens ein erfasstes Objekt, dessen Orientierung bestimmt worden ist, durch einen Vergleich mit einer Referenz klassifiziert wird, wobei die Orientierung mittels einer Berechnung mindestens eines Trägheitsmoments des erfassten Objekts bestimmt wird. Dieses Verfahren weist den Vorteil auf, dass sich die räumliche Orientierung eines erfassten Objekts und damit auch eine Objektklassifizierung effektiv und mit einem im Vergleich zu Fourier-basierten Methoden geringen Aufwand berechnen lässt.

Das Bild ist insbesondere ein in einem sichtbaren Spektrum aufgenommenes Bild, wodurch sich eine im Vergleich zu einer Infrarotbildaufnahme hohe Auflösung ergibt, was eine Objekterkennung erheblich vereinfacht. Das Bild weist typischerweise (m · n) matrixförmig angeordnete Bildpunkte auf. Jedoch mag alternativ oder zusätzlich ein Infrarotbild aufgenommen werden. IR-Detektoren mit hoher Bildauflösung, beispielsweise auf der Basis von GaAs-Sensoren oder Mikrobolometer-basierten-Sensoren, sind grundsätzlich verfügbar, aber noch sehr teuer. Sie werden derzeit meist z.B. in FLIR ("Forward Looking Infra Red")-Kameras oder bei einer Gebäudewärmeinspektion verwendet.

Unter dem Erfassen eines Objekts wird insbesondere ein Erfassen eines nicht zu einem Bildhintergrund gehörigen Objekts verstanden. Dies kann so durchgeführt werden, dass der Bildhintergrund bestimmt und aus dem Bild entfernt wird. Zusätzlich oder alternativ mag ein nicht zum Bildhintergrund gehöriges Objekt gegen den Bildhintergrund erfasst werden. Ein erfasstes und freigestelltes Objekt mag auch als "segmentiertes" Objekt bezeichnet werden. Das Bestimmen des Bildhintergrunds mag ein Vergleichen mit einem zuvor ohne Anwesenheit eines Objekts aufgenommenen Bildhintergrunds als einer (Hintergrund-) Referenz umfassen.

Beispielsweise mag bei der Objekterfassung zunächst jegliche Pixelgruppe, die sich von einem vorgegebenen Hintergrund unterscheidet bzw. abhebt, zunächst als unerkanntes Objekt behandelt werden. Es wird dann versucht, jedes dieser erfassten Objekte mittels der Klassifizierung zu erkennen, insbesondere sukzessive.

Unter einer Orientierung wird eine räumliche Orientierung des Objekts verstanden. Bei einer zweidimensionalen Aufnahme entspricht die räumliche Orientierung insbesondere einer Orientierung oder Ausrichtung in einer dem Bild zugehörigen Bildebene.

Bei bekannter Orientierung kann diese dazu verwendet werden, die Orientierung des erfassten Objekts mit einem geringen rechnerischen Aufwand an eine Orientierung der Referenz (insbesondere eines Referenzbilds) anzugleichen. Dies mag beispielsweise dadurch erreicht werden, dass das gegen den Hintergrund erfasste Objekt in eine für einen Vergleich mit einer Referenz geeignete Lage gedreht wird oder die Referenz entsprechend auf die Orientierung des Objekts hin gedreht wird.

Dieses Objekt kann nach der Angleichung der Orientierungen mittels der Referenz klassifiziert werden. Wird eine ausreichend genaue Übereinstimmung mit einer Referenz gefunden, können dem Objekt Eigenschaften der Referenz zugeordnet werden. Er ist dann klassifiziert oder erkannt. Kann das Objekt nicht klassifiziert werden, wird es auch nicht erkannt. Durch die Klassifizierung wird also eine Objekterkennung erreicht. Klassifizierung und Objekterkennung können auch synonym verwendet werden. Die Klassifizierung oder Objekterkennung kann beispielsweise bedeuten, dass erkannt wird, ob es sich um eine Person oder ein Tier handelt.

Es ist eine Ausgestaltung, dass ein Schwerpunkt des erfassten Objekts bestimmt wird. Dadurch werden eine Berechnung des mindestens einen Trägheitsmoments als auch eine Drehung des Objekts erleichtert. Die Berechnung des Schwerpunkts beruht auf der Auswertung der Momente erster Ordnung. Der Schwerpunkt (xs, ys) ist eine charakteristische Objektgröße, welche die Position des Objektes in dem Bild eindeutig festlegt.

Die Berechnung des Schwerpunkts einer beispielhaft herausgegriffenen (N x N)-Bildpunktmatrix By lässt sich rechentechnisch aus einer x-Koordinate xs des Schwerpunkts gemäß Gl.(1):

$$xs = \frac{1}{Qsum} \cdot \sum_{xi=0}^{N-1} \sum_{yj=0}^{N-1} B_{xi,yj} \cdot xi$$

und aus einer y-Koordinate ys des Schwerpunkts gemäß Gl.(2):

$$ys = \frac{1}{Qsum} \cdot \sum_{xi=0}^{N-1} \sum_{yj=0}^{N-1} B_{xi,yj} \cdot yj$$

mit dem sog. "Gesamtgewicht" Qsum des Objekts gemäß Gl.(3):

$$Qsum = \sum_{xi=0}^{N-1} \sum_{yj=0}^{N-1} B_{xi,yj}$$

mit einem rechentechnisch geringen Aufwand ermitteln.

Es ist noch eine Ausgestaltung, dass die Orientierung des erfassten Objekts mittels einer Berechnung mindestens eines Trägheitsmoments des erfassten Objekts in dessen Schwerpunktsystem bestimmt wird. Dabei wird ausgenutzt, dass vorteilhafterweise in der Regel zumindest eines der Trägheitsmomente sich auf eine Hauptfigurenachse des zu klassifizierenden Objekts bezieht (z.B. eine Längsachse eines menschlichen Körpers oder eine Querachse in Draufsicht auf einen menschlichen Körper).

Es ist eine weitere Ausgestaltung, dass im Schwerpunktsystem des Objekts drei Trägheitsmomente des in einer zweidimensionalen Bildebene erfassten Objekts bestimmt werden, nämlich bei tensorieller Betrachtungsweise die senkrechten und waagrechten Trägheitsmomente Txx und Tyy sowie ein Deviationsmoment Txy bzw. Tyx. Die Werte dieser drei Trägheitsmomente Txx, Tyy und Txy sind zunächst von der anfangs zufällig gewählten Ausrichtung des Objekts oder von der tatsächlich gemessenen Ausrichtung des Objekts im Koordinatensystem des Bilds bzw. der Bildmatrix abhängig.

Bei einer vorgegebenen Objektausrichtung lassen sich die drei Trägheitsmomente für das Objekt mit rechentechnisch geringem Aufwand folgendermaßen berechnen, nämlich ein erstes Trägheitsmoment Txx gemäß Gl.(4):

$$Txx = \frac{1}{Qsum} \cdot \sum_{xi=0}^{N-1} \sum_{yj=0}^{N-1} B_{xi,yj} \cdot (xi - xs)^2$$

ein zweites Trägheitsmoment Tyy gemäß Gl.(5):

$$Tyy = \frac{1}{Qsum} \cdot \sum_{xi=0}^{N-1} \sum_{yj=0}^{N-1} B_{xi,yj} \cdot (yi - ys)^2$$

und ein Deviationsmoment Txy gemäß Gl.(6):

$$Txy = Tyx = \frac{1}{Qsum} \cdot \sum_{xi=0}^{N-1} \sum_{yj=0}^{N-1} B_{xi,yj} \cdot (xi - xs) \cdot (yj - ys)$$

Die berechneten Trägheitsmomente Txx, Tyy und Txy tragen eindeutig die Information über die momentan vorliegende Ausrichtung und Orientierung des Objekts, wobei jede Änderung der Ausrichtung (z.B. durch Drehung) zu anderen Werten dieser Trägheitsmomente führt.

Gesucht ist nun vorteilhafterweise jene Objektausrichtung (im Folgenden ohne Beschränkung der Allgemeinheit auch als "Ziel-Orientierung" bezeichnet), bei der das gemischte Trägheitselement oder Deviationsmoment Txy Null wird. Diese Ziel-Orientierung zeichnet sich dadurch aus, dass in diesem Fall die beiden Hauptfigurenachsen des Objekts stets horizontal oder senkrecht (bzw. parallel zu einem Bildrand) im Betrachtungsbild bzw. in der Bildmatrix angeordnet sind, was zumeist auch einer Ausrichtung der Referenz entspricht.

Es ist folglich eine vorteilhafte Weiterbildung, dass das Objekt so lange gedreht wird, bis sein Deviationsmoment Txy minimiert wird, insbesondere bis auf Null minimiert wird. Dies mag beispielsweise iterativ geschehen.

Es ist noch eine weitere Ausgestaltung, dass das erfasste Objekt um einen Winkel $\varphi$ in der Bildebene gedreht wird, bei dem das Deviationsmoment Txy minimiert ist. Es ist eine rechnerisch besonders einfache Ausgestaltung, dass der Winkel $\varphi$ gemäß der folgenden Gl.(7)

$$\varphi = \mathrm{atan}\left[\left(\frac{Txx - Tyy}{2 \cdot Txy}\right) - \sqrt{\left(\frac{Txx - Tyy}{2 \cdot Txy}\right)^2 + 1}\right]$$

berechnet wird, da damit das Objekt in einem Rechenvorgang auf eine Ziel-Orientierung mit Txy = Tyx = 0 gedreht wird. Die Drehung findet um den zuvor bestimmten Schwerpunkt herum statt.

Es ist ferner eine Ausgestaltung, dass vor dem Klassifizieren eine Farbtiefe des Bilds reduziert wird. Dies ergibt den Vorteil, dass die Bildpunkte des Objekts mit stärkerem Kontrast gegen eine Bildumgebung abgehoben sind und damit auch eine Berechnung des Schwerpunkts und der Trägheitsmomente des Objekts erleichtert wird. Dies gilt insbesondere für den Fall, dass eine Hintergrundabtrennung keine scharfe Kontur des Objekts bereitstellt. Die Farbtiefe des Bilds mag insbesondere auf die eines Schwarz-Weiß-Bilds reduziert werden, also nur schwarze oder weiße Bildpunkte aufweisen. Insbesondere mag das Objekt dann nur aus schwarzen oder weißen Bildpunkten bestehen und die Bildumgebung nur aus weißen bzw. schwarzen Bildpunkten. Diese Ausgestaltung bewirkt also insbesondere, dass folgend die schwellenbehandelten erfassten Binärobjekte analysiert werden.

Das Reduzieren der Farbtiefe mag insbesondere im Rahmen bzw. als ein Teilschritt des Trennens des Objekts von dem allgemeinen Bildhintergrund durchgeführt werden. Es mag alternativ z.B. nach dem Abtrennen des Hintergrunds durchgeführt werden, um die Berechnung des Schwerpunkts und/oder der Trägheitsmomente zu erleichtern. Auch ist die Aussagekraft des Ergebnisses ausreichend.

Die Aufgabe wird auch gelöst durch einen Detektor (im Folgenden ohne Beschränkung der Allgemeinheit als "Präsenzdetektor" bezeichnet, wobei der Präsenzdetektor mindestens einen Bildsensor, insbesondere CMOS-Sensor, aufweist und zum Durchführen des Verfahrens wie oben beschrieben ausgebildet ist. Dieser Präsenzdetektor kann analog zu dem Verfahren ausgebildet sein und ergibt die gleichen Vorteile.

Der mindestens eine CMOS-Sensor nimmt die Bilder auf und ist mit einer Datenverarbeitungseinrichtung gekoppelt, welche diese Bilder im Rahmen des oben beschriebenen Verfahrens verarbeitet. Das Verfahren kann also auf der Datenverarbeitungseinrichtung ablaufen.

Die Datenverarbeitungseinrichtung mag alterativ eine separate Einheit darstellen.

Der Präsenzdetektor ist insbesondere dazu eingerichtet, abhängig von einer Art, Position und/oder Ausrichtung des klassifizierten Objekts mindestens eine Aktion auszulösen, z.B. mindestens ein Signal auszugeben, um eine Beleuchtung anzuschalten o.ä. Beispielsweise mag nach einem Erkennen, dass es sich bei dem Objekt um eine Person handelt, ein Signal zum Einschalten einer Beleuchtung ausgegeben werden. Ein solches Signal mag nicht ausgegeben werden, wenn ein Tier erkannt worden ist. Auch mag dann, wenn eine Person in der Nähe einer Tür erkannt worden ist, die Tür geöffnet werden und eine Beleuchtung auf der anderen Seite der Tür eingeschaltet werden. Ferner mag, da die Position des erkannten Objekts bekannt ist, eine Lichtquelle auf das Objekt gerichtet werden. Alternativ oder zusätzlich mag ein Alarmsignal an eine Überwachungseinheit ausgegeben werden, z.B. an eine Sicherheitszentrale.

Beispielsweise mag der Präsenzdetektor eine Kamera (z.B. eine Videoeinheit) als Bildaufnahmeeinrichtung und die Datenverarbeitungseinrichtung (z.B. eine dedizierte Bilddatenbearbeitungseinheit) aufweisen, wobei die Datenverarbeitungseinheit je nach Ergebnislage einen Schalter (z.B. ein Schaltrelais) schaltet bzw. eine Ergebnislage an ein Lichtmanagementsystem meldet.

Die Aufgabe wird auch gelöst durch ein Beleuchtungssystem oder eine Beleuchtungseinrichtung, welche mindestens einen Präsenzdetektor wie oben beschrieben aufweist. Dabei ist der Präsenzdetektor, insbesondere dessen CMOS-Sensor, mit mindestens einer Lichtquelle des Beleuchtungssystems gekoppelt. Die Datenverarbeitungseinrichtung mag einen Teil des Beleuchtungssystems darstellen in welchem Fall der mindestens eine Präsenzdetektor, insbesondere dessen CMOS-Sensor, mit der Datenverarbeitungseinrichtung des Beleuchtungssystems gekoppelt ist.

Insbesondere mag das Beleuchtungssystem mit mehreren CMOS-Sensoren ausgerüstet sein. Dies umfasst den Fall, dass das Beleuchtungssystem mehrere Kameras oder Videosensoren umfasst.

Diese mögen jeweilige Datenverarbeitungseinrichtungen aufweisen. Alternativ mag eine Datenverarbeitungseinrichtung des Beleuchtungssystems mit mehreren CMOS-Sensoren gekoppelt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird. Dabei können zur Übersichtlichkeit gleiche oder gleichwirkende Elemente mit gleichen Bezugszeichen versehen sein.

Fig.1     zeigt ein Ablaufdiagramm des Verfahrens mit einer zugehörigen Vorrichtung;
Fig.2     zeigt ein mittels des Verfahrens aus Fig.1 aufgenommenes Bild; und
Fig.3-5   zeigen das aufgenommene Bild nach aufeinanderfolgender Verarbeitung mittels unterschiedlicher Verfahrensschritte des Verfahrens aus Fig.1.

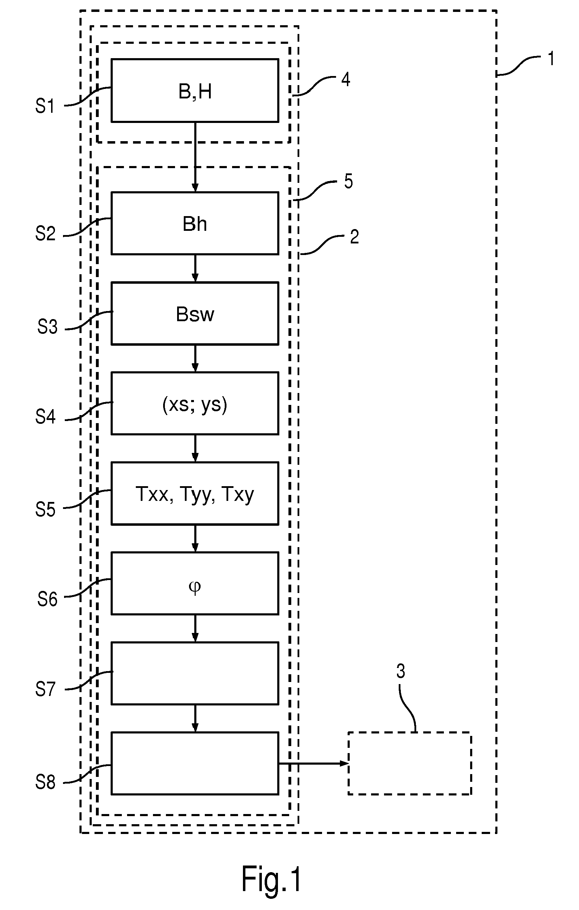

**Fig.1** zeigt ein Beleuchtungssystem 1 mit einem Präsenzdetektor 2 und mindestens einer mit dem Präsenzdetektor 2 gekoppelten Lichtquelle 3 (z.B. aufweisend eine oder mehrere LED-basierte Leuchtmittel, herkömmliche Leuchtstoffröhren usw.). Der Präsenzdetektor 2 weist einen CMOS-Sensor 4 und eine damit gekoppelte Datenverarbeitungseinrichtung 5 auf.

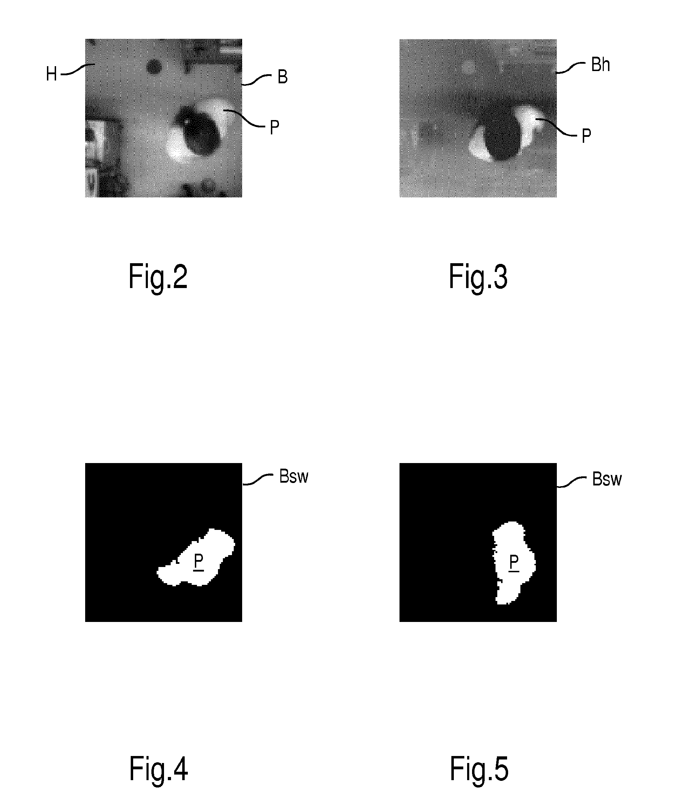

Der CMOS-Sensor 4 ist z.B. an einer Decke eines zu überwachenden Bereichs angeordnet und nimmt in einem Schritt S1 ein in **Fig.2** gezeigtes Bild B des Bereichs auf. Dieses Bild B zeigt in Draufsicht ein Objekt in Form einer Person P und einen Hintergrund H, der z.B. Regale aufweist.

Das aufgenommene Bild B wird in einem zweiten Schritt S2 von der Datenverarbeitungseinrichtung 5 datenverarbeitet, um den Hintergrund H zu entfernen. Dazu wird ein entsprechender Algorithmus auf das Bild B angewandt. **Fig.3** zeigt ein aus dem ursprünglich aufgenommenen Bild B nach Anwendung des Algorithmus aus Schritt S2 hintergrundreduziertes Bild Bh. Der Hintergrund H ist deutlich zurückgetreten, indem zuvor sichtbare Hintergrundobjekte weitgehend entfernt worden sind. Jedoch ist der Hintergrund H nicht vollständig entfernt und damit die Umgebung der Person P nicht vollständig gleichmäßig, sondern es sind noch Unregelmäßigkeiten oder "Reste" erkennbar. Auch hat der Algorithmus den Kontrast der Person P etwas geglättet.

In einem dritten Schritt S3 wird nun aus dem in Schritt S2 erzeugten hintergrundreduzierten Bild Bh ein Schwarz-Weiß-Bild Bsw angefertigt, insbesondere mittels einer Reduzierung einer Farbauflösung. Die Farbauflösung entspricht hier aufgrund des ursprünglich grauwertigen Bilds B einer Graustufen-Auflösung. Die Graustufen-Auflösung kann beispielsweise mittels einer grundsätzlich bekannten Schwellwertoperation durchgeführt werden.

**Fig.4** zeigt das schwarz-weiße hintergrundreduzierte Bild Bsw. Dort ist nun die Person P durchgehend weiß und der sie umgebende Bildbereich durchgehend schwarz. Die Person P kann also einfach als der weiße Bereich aufgefasst werden. Folglich kann die Person P in dem aufgenommenen Bild B durch den Schritt S3 oder durch eine Kombination der Schritte S2 und S3 erfasst werden.

In einem Schritt S4 wird zunächst ein Schwerpunkt (xs; ys) der in Fig.4 gezeigten Person P berechnet, z.B. gemäß der obigen Gl. (1) bis (3). Anschließend werden in einem Schritt S5 die Trägheitsmomente Txx, Tyy und Txy der Person P um ihren Schwerpunkt (xs; ys) berechnet, z.B. gemäß der obigen Gl. (4) bis (6). Schritt S5 oder eine Kombination der Schritte S4 und S5 dient zum Bestimmen der Orientierung der Person P im Bild, welche durch die Trägheitsmomente Txx, Tyy und Txy eindeutig gegeben ist.

Zur Klassifizierung der Person P wird folgend in einem Schritt S6 die Person P in der Bildebene um einen Winkel φ um ihren Schwerpunkt (xs; ys) gedreht, z.B. gemäß Gl. (7).

Dadurch wird die Person P bzw. deren durch die Trägheitsmomente Txx oder Tyy identifizierte Längsachse parallel zu einer Bildseite ausgerichtet, hier: parallel zu einem rechten oder linken Seitenrand.

In dieser Ziel-Orientierung lässt sich die ausgerichtete Person P in Schritt S7 mit einem geringen rechnerischen Aufwand mit einer Referenz (z.B. einem Referenzobjekt oder einem Referenzbild; o. Abb.) vergleichen.

Dies kann beispielsweise mittels einer normalisierten Kreuzkorrelation geschehen. So kann hier die Person P als eine menschliche Person erkannt werden.

In einem Schritt S8 kann abhängig z.B. von der Art der erkannten Person P, ihrer ursprünglichen Ausrichtung und/oder ihrer Position in dem Bild B mindestens eine Aktion ausgelöst werden, z.B. die mindestens eine Lichtquelle 3 aktiviert werden. Beispielsweise mag, da die Position der erkannten Person P durch Bestimmung ihres Schwerpunkts (xs, ys) bekannt ist, eine Lichtquelle zur Beleuchtung auf die Position gerichtet werden.

Obwohl die Erfindung im Detail durch das gezeigte Ausführungsbeispiel näher illustriert und beschrieben wurde, so ist die Erfindung nicht darauf eingeschränkt und andere Variationen können vom Fachmann hieraus abgeleitet werden, ohne den Schutzumfang der Erfindung zu verlassen.

So mag die Datenverarbeitungseinrichtung 5 auch keinen Teil des Präsenzdetektors darstellen, sondern des Beleuchtungssystems 1. Das Beleuchtungssystem 1 mag auch mehrere CMOS-Sensoren aufweisen.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

Ganz allgemein mag ein Bereich auch von mehreren CMOS-Sensoren überwacht werden. Dann können z.B. auch dreidimensionale oder stereoskopische Bilder aufgenommen werden. Das Verfahren kann dann auch auf solche dreidimensionalen Bilder angewandt werden, z.B. durch eine Berechnung des Schwerpunkts (xs; ys; zs) und von drei Körperhauptachsen mittels der sechs Trägheitsmomente Txx, Tyy, Tzz, Txy, Txz und Tyz.

Bezugszeichen

| | |
|---|---|
| 1 | Beleuchtungssystem |
| 2 | Präsenzdetektor |
| 3 | Lichtquelle |
| 4 | CMOS-Sensor |
| 5 | Datenverarbeitungseinrichtung |
| B | Aufgenommenes Bild |
| Bh | Hintergrundreduziertes Bild |
| Bsw | Schwarz-weiß-Bild |
| H | Bildhintergrund |
| P | Person |
| S1-S8 | Verfahrensschritte |
| Txx | Erstes Trägheitsmoment in x-Richtung |
| Tyy | Zweites Trägheitsmoment in y.Richtung |
| Txy | Deviationsmoment |
| xs | x-Koordinate des Schwerpunkts |
| ys | y-Koordinate des Schwerpunkts |
| $\varphi$ | Drehwinkel |

**Patentansprüche**

1. Verfahren (S1-S8) zur Bildverarbeitung, bei dem

   - mindestens ein Objekt (P) in einem aufgenommenen Bild (B) erfasst wird (S2; S2, S3),
   - eine Orientierung mindestens eines erfassten Objekts (P) bestimmt wird (S4, S5) und
   - mindestens ein erfasstes Objekt (P), dessen Orientierung bestimmt worden ist, durch einen Vergleich mit einer Referenz klassifiziert wird (S6, S7),
   wobei
   - die Orientierung mittels einer Berechnung mindestens eines Trägheitsmoments (Txx, Tyy, Txy) des erfassten Objekts (P) bestimmt wird (S5).

2. Verfahren (S1-S8) nach Anspruch 1, bei dem ein Schwerpunkt (xs, ys) des erfassten Objekts (P) bestimmt wird und die Orientierung des erfassten Objekts (P) mittels einer Berechnung mindestens eines Trägheitsmoments (Txx, Tyy, Txy) des erfassten Objekts in dessen Schwerpunktsystem bestimmt wird.

3. Verfahren (S1-S8) nach einem der vorhergehenden Ansprüche, bei dem drei Trägheitsmomente (Txx, Tyy, Txy) des in einer Bildebene erfassten Objekts bestimmt werden.

4. Verfahren (S1-S8) nach Anspruch 3, bei dem das erfasste Objekt (P) gedreht wird, bis ein Deviationsmoment (Txy) minimiert ist.

5. Verfahren (S1-S8) nach Anspruch 4, bei dem das erfasste Objekt (P) um einen Winkel ($\varphi$) mit

$$\varphi = \operatorname{atan}\left[\left(\frac{Txx - Tyy}{2 \cdot Txy}\right) - \sqrt{\left(\frac{Txx - Tyy}{2 \cdot Txy}\right)^2 + 1}\right]$$

in einer Bildebene gedreht wird (S6).

6. Verfahren (S1-S8) nach einem der vorhergehenden Ansprüche, bei dem zum Erfassen des mindestens einen Objekts (P) in dem Bild (B) ein Bildhintergrund (H) bestimmt und aus dem Bild (B) entfernt wird.

7. Verfahren (S1-S8) nach einem der vorhergehenden Ansprüche, bei dem vor dem Klassifizieren (S6, S7) eine Farbtiefe des Bilds (Bh) reduziert wird, insbesondere auf ein Schwarz-Weiß-Bild (Bsw).

8. Verfahren (S1-S8) nach einem der vorhergehenden Ansprüche, bei dem das Klassifizieren (S7) mittels einer normalisierten Kreuzkorrelationsanalyse durchgeführt wird.

9. Präsenzdetektor (2), wobei der Präsenzdetektor (2) mindestens einen Bildsensor (4), insbesondere CMOS-Sensor, aufweist und zum Durchführen des Verfahrens (S1-S8) nach einem der vorhergehenden Ansprüche ausgebildet ist.

10. Beleuchtungssystem (1), aufweisend mindestens einen Präsenzdetektor (2) nach Anspruch 8, der mit mindestens einer Lichtquelle (3) des Beleuchtungssystems (1) gekoppelt ist.

Fig.1

Fig.2

Fig.3

Fig.4

Fig.5

**Europäisches Patentamt**
**European Patent Office**
**Office européen des brevets**

# EUROPÄISCHER RECHERCHENBERICHT

Nummer der Anmeldung

EP 15 18 9392

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 37 16 420 A1 (FUJI ELECTRIC CO LTD [JP]) 19. November 1987 (1987-11-19) * Seite 2, Zeile 35 - Seite 4, Zeile 5; Ansprüche; Abbildungen 1,2 * ----- | 1-10 | INV. G06K9/00 G06K9/38 |
| Y | DE 690 32 326 T2 (SARNOFF CORP [US]) 10. September 1998 (1998-09-10) * Anspruch 16 * ----- | 1-10 | |
| Y | DE 10 2010 032761 A1 (E CUE CONTROL GMBH [DE]) 2. Februar 2012 (2012-02-02) * das ganze Dokument * ----- | 9,10 | |
| A | | 1-8 | |
| A | EP 1 109 141 A1 (SIEMENS BUILDING TECH AG [CH]) 20. Juni 2001 (2001-06-20) * das ganze Dokument * ----- | 1-10 | |
| A | US 8 798 316 B2 (BERKVENS WINFRIED ANTONIUS HENRICUS [NL]) 5. August 2014 (2014-08-05) * das ganze Dokument * ----- | 1-10 | RECHERCHIERTE SACHGEBIETE (IPC) G06K |

Der vorliegende Recherchenbericht wurde für alle Patentansprüche erstellt

| Recherchenort | Abschlußdatum der Recherche | Prüfer |
|---|---|---|
| Den Haag | 3. Februar 2016 | Bakker, Jeroen |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 15 18 9392

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-02-2016

| Im Recherchenbericht angeführtes Patentdokument | Datum der Veröffentlichung | Mitglied(er) der Patentfamilie | Datum der Veröffentlichung |
|---|---|---|---|
| DE 3716420 A1 | 19-11-1987 | DE 3716420 A1 | 19-11-1987 |
| | | JP S62267610 A | 20-11-1987 |
| | | US 4748676 A | 31-05-1988 |
| DE 69032326 T2 | 10-09-1998 | DE 69032326 D1 | 25-06-1998 |
| | | DE 69032326 T2 | 10-09-1998 |
| | | EP 0499627 A1 | 26-08-1992 |
| | | ES 2116284 T3 | 16-07-1998 |
| | | JP 3178719 B2 | 25-06-2001 |
| | | JP H05501770 A | 02-04-1993 |
| | | US 5063603 A | 05-11-1991 |
| | | WO 9106921 A1 | 16-05-1991 |
| DE 102010032761 A1 | 02-02-2012 | KEINE | |
| EP 1109141 A1 | 20-06-2001 | AT 375580 T | 15-10-2007 |
| | | EP 1109141 A1 | 20-06-2001 |
| | | EP 1418555 A1 | 12-05-2004 |
| | | IL 139611 A | 19-06-2005 |
| | | US 2001015409 A1 | 23-08-2001 |
| US 8798316 B2 | 05-08-2014 | CN 102422719 A | 18-04-2012 |
| | | EP 2430886 A1 | 21-03-2012 |
| | | JP 5802655 B2 | 28-10-2015 |
| | | JP 2012527080 A | 01-11-2012 |
| | | US 2012057755 A1 | 08-03-2012 |
| | | WO 2010131212 A1 | 18-11-2010 |

EPO FORM P0461

Für nähere Einzelheiten zu diesem Anhang : siehe Amtsblatt des Europäischen Patentamts, Nr.12/82